**Europäisches Patentamt**

**European Patent Office**

**Office européen des brevets**

(19)

(11) Veröffentlichungsnummer: **0 149 852**

**A2**

(12) **EUROPÄISCHE PATENTANMELDUNG**

(21) Anmeldenummer: **84116418.9**

(22) Anmeldetag: **28.12.84**

(51) Int. Cl.⁴: **G 06 F 15/70**

(30) Priorität: **30.12.83 DE 3347645**

(43) Veröffentlichungstag der Anmeldung:
**31.07.85 Patentblatt 85/31**

(84) Benannte Vertragsstaaten:
**AT BE CH DE FR GB IT LI NL SE**

(71) Anmelder: **Dr.-Ing. Ludwig Pietzsch GmbH & Co.**
**Hertzstrasse 32-34**
**D-7505 Ettlingen(DE)**

(72) Erfinder: **Pietzsch, Ludwig, Dr. Ing.**
**Im Rosengärtle 14**
**D-7500 Karlsruhe 41(DE)**

(72) Erfinder: **Overlach, Knud, Dr. Ing.**
**Ernt Barlach Ring 11**
**D-7505 Ettlingen 6(DE)**

(72) Erfinder: **Senger, Detlef, Dr. Ing.**
**Schlosserweg 8**
**D-7505 Ettlingen 5(DE)**

(72) Erfinder: **Breunig, Walter, Dipl. Ing.**
**Torwiesenstrasse 57**
**D-7500 Karlsruhe 41(DE)**

(74) Vertreter: **Liesegang, Roland, Dr.-Ing.**
**Sckellstrasse 1**
**D-8000 München 80(DE)**

(54) **Verfahren und Einrichtung zum opto-elektronischen Prüfen eines Flächemusters an einem Objekt.**

(57) Bei einem Verfahren zum opto-elektronischen Prüfen eines Flächemusters an einem Objekt, insbesondere einer Leiterplatte, wird eine Mikroprüfung vorgenommen, indem zeilenweise aufgenommene Bildelemente Bildpunkt für Bildpunkt einer Folge von Bildoperationen zu einer Abmessungs-/Abstandsprüfung unterzogen und das jeweilige Ergebnis mit dem entsprechenden aufgenommenen Bildpunkt verglichen wird. Gleichzeitig wird eine Makroprüfung vorgenommen, indem die aufgenommenen Bildpunkte in Bildfeldern zusammengefaßt und jeweils auf eine einzige charakteristische Bildinformation reduziert werden, worauf wieder ein Vergleich, in diesem Fall jedoch mit der entsprechenden Bildinformation eines Referenzbildes, erfolgt. So lassen sich in Echtzeit Flächenmuster; beispielsweise Leiterplatten, sowohl auf kleine, visuell kaum sichtbare Fehler als auch auf Makrofehler hin schnell und vollautomatisch überprüfen.

**FIG. 2**

**Dr.-Ing. Roland Liesegang**

Sckellstrasse 1
D-8000 München 80
Telefon (089) 4 48 24 96

Telex 5214362 pali d
Telekopierer (089) 27204 80, 2720481
Telegramme patemus münchen

Postscheck München 39418-802
Hypobank München 6400194333
Reuschelbank München 2603007

0149852

- 1 -

Verfahren und Einrichtung zum opto-elektronischen Prüfen
eines Flächenmusters an einem Objekt

Die Erfindung betrifft ein Verfahren zum opto-elektronischen Prüfen eines Flächenmusters an einem Objekt, insbesondere einer Leiterplatte, wobei das Flächenmuster zeilenweise aufgenommen und die aufgenommenen Bildelemente nach einer Bearbeitung mit korrespondierenden Bildelementen eines Referenzbildes verglichen werden.

Leiterplatten wurden und werden derzeit im wesentlichen visuell auf Defekte, Abweichungen o. dgl. überprüft. Dabei ist man vollständig auf die Zuverlässigkeit der überprüfenden Person angewiesen. Kleinste Fehler, die bei zunehmender Dichte der Bestückung von gedruckten Schaltungen o. dgl. auf Leiterplatten durchaus zu Störungen führen können, lassen sich visuell nur schwer erkennen. Darüberhinaus ist die visuelle Überprüfung zeitaufwendig.

Mit einem bekannten opto-elektronischen Prüfsystem (DE-OS 29 29 846) werden unter Vermeidung eines Vergleiches mit einer Referenzplatte o. dgl. die Leiterplatten anhand Musterspezifischer Prüfkriterien absolut mit Hilfe einer analogen Signalvorarbeitung und daran angeschlossener Fehlererkennungs-Schaltungen überprüft, deren Fehlermeldungen an ihren Ausgängen von einer Fehlerverwaltung übernommen werden, die diese mit örtlichen Koordinaten des Wegmeß-

0149852

systemes eines X-Y-Tisches verknüpfen und in einem Speicher bis zum vollkommenen Durchlauf der zu prüfenden Leiterplatte ablegen und die anschließend dazu benutzt werden kann, die Leiterplatte so zu verfahren, daß die Fehler über eine Betrachtungseinrichtung sichtbar werden können.

Der Erfindung liegt die Aufgabe zugrunde, ein Verfahren und eine Einrichtung zu schaffen, die nach dem Vergleichsverfahren arbeiten und Fehler bis zu Ausmaßen von wenigen µm schnell und zuverlässig erfassen.

Zur Lösung dieser Aufgabe ist bei einem Verfahren nach der Erfindung vorgesehen, daß eine Mikroprüfung vorgenommen wird, indem die zeilenweise aufgenommenen Bildelemente Bildpunkt für Bildpunkt einer Folge von Bildoperationen unterzogen und das jeweilige Ergebnis mit dem korrespondierenden aufgenommenen Bildpunkt, wie er in der Aufnahme anfällt, verglichen wird, und daß gleichzeitig eine Makroprüfung vorgenommen wird, indem die aufgenommenen Bildpunkte in Bildfeldern zusammengefaßt und jeweils auf eine einzige, für das betreffende Bildfeld charakteristische Bildinformation reduziert werden, worauf jede Bildinformation mit der charakteristischen Bildinformation des korrespondierenden Referenz-Bildfeldes verglichen und/oder anhand vorgegebener geometrischer Kriterien überprüft wird.

In einem Verfahren nach der Erfindung wird also in Echtzeit eine Mikroprüfung und eine Makroprüfung nebeneinander vorgenommen, wobei in der Mikroprüfung nicht ein üblicher Vergleich mit einem sehr hohe Speicherkapazität erfordernden Referenzbild sondern ein Vergleich des bearbeiteten Bildpunktes mit dem Ist-Bildpunkt erfolgt. In der Mikroprüfung lassen sich Abstands- und Abmessungsfehler kleinster Abmessungen bis zu wenigen µm erfassen. Großflächige Fehler, die in der Mikroprüfung nicht erfaßt werden, werden in der Makroprüfung aufgespürt.

In der Mikroprüfung wird vorzugsweise so gearbeitet, daß

bei den Bildoperationen in der Mikroprüfung Bildpunkt für Bildpunkt jeweils in Abhängigkeit von den umgebenden Bildpunkten in den beiden Nachbarzeilen und in der gleichen Zeile schrittweise gesetzt oder gelöscht werden.

Die charakteristische Bildinformation in der Makroprüfung wird vorteilhafterweise durch Mehrheitsentscheid gewonnen.

Insbesondere wird vorteilhaft so vorgegangen, daß die Bildoperationen eine Folge von Dilatationen und gleich vieler Erosionen jedes Bildpunktes in Abhängigkeit von den ihn umgebenden Bildpunkten umfaßt, wobei die Reihenfolge "Dilatationen vor Erosionen" zur Abstandsprüfung der Abstände zwischen den einzelnen Leiterbahnen oder dgl. und die Reihenfolge "Erosionen vor Dilatationen" zur Abmessungsprüfung der Abmessungen von Leiterbahnen der dgl. verwendet werden.

Auch bei maßlicher Korrektheit des überprüften Leiterbahnabschnittes kann bei der vergleichenden Mikroprüfung ein Restbild entstehen, das erfindungsgemäß einer Bildreinigung unterzogen wird, d. h. bei Korrektheit des überprüften Bildausschnittes ausgeschieden, bei Fehlerhaftigkeit dagegen als Fehlstelle klassifiziert wird.

Eine Einrichtung zum opto-elektronischen Prüfen eines Flächenmusters an einem Objekt, insbesondere einer Leiterplatte, mit einer Aufnahmekamera zur zeilenweisen Aufnahme des Objektes, einem X-Y-Tisch zur Unterstützung des Objektes, der ein relatives Verfahren des Objektes gegenüber der Aufnahmekamera zuläßt, und einem Bildverarbeitungsgerät, in welchem Bildoperationen zur Fehlererfassung durchgeführt werden, ist erfindungsgemäß dadurch gekennzeichnet, daß das Bildverarbeitungsgerät eine Mikroprüfeinheit und eine dazu parallel geschaltete Makroprüfeinheit umfaßt, die als Eingänge in digitale Signale umgewandelte Ausgangssignale der Aufnahmekamera erhalten.

Vorzugsweise enthält die Mikroprüfeinheit eine Anzahl von in Reihe geschalteten Bildverarbeitungseinheiten in zwei parallelgeschalteten Gruppen, wobei jede Bildverarbeitungseinheit der einen Gruppe für eine Dilatation mit nachfolgender Erosion eines jeden Bildpunktes zur Abstandsprüfung und jede Bildverarbeitungseinheit der zweiten Gruppe für eine Erosion mit nachfolgender Dilatation zur Abmessungsprüfung ausgelegt ist, außerdem einen Vergleichsbaustein, in dem aus den bearbeiteten Ausgangssignalen der Bildverarbeitungseinheiten ., und den unveränderten, aufgenommenen Bildsignalen die Differenz gebildet wird, und schließlich eine Bildreinigungseinheit zum Bearbeiten der Differenzsignale aus dem Vergleichsbaustein aufweist.

Gerätetechnisch wird dieses Konzept in besonders einfacher Weise dadurch verwirklicht, daß jede Bildverarbeitungseinheit drei Bildpunktumgebungsspeicher je für eine von drei benachbarten Zeilen aufweist, von denen der erste drei Bildpunkte in einer Vorläuferzeile, der zweite drei Bildpunkte in einer aktuellen Zeile mit dem zu bearbeitenden Bildpunkt in der Mitte und der dritte drei Bildpunkte in einer Nachfolgerzeile speichert, und daß jeder Bildpunktumgebungsspeicher drei Ausgänge aufweist, die zu einem Verknüpfungsspeicher geführt sind, in welchem an dem zu bearbeitenden Bildpunkt in Abhängigkeit von den acht Umgebungs-Bildpunkten eine Bildoperation "Löschen" oder "Setzen" ausgeführt wird. Ferner weist jede Bildverarbeitungseinheit einen Verzögerungsbaustein zum Verzögern des aufgenommenen, unveränderten Bildsignals um einen Zeitraum auf, der für die Bildpunktbearbeitung benötigt wird.

Vorteilhaft ist vorgesehen, daß dem zweiten Bildpunktumgebungsspeicher ein erster Zeilenspeicher vorgeschaltet ist, welcher die Bildpunkte einer Zeile um einen Takt verzögert an den zweiten Bildpunktumgebungsspeicher übergibt, und daß dem ersten Bildumgebungsspeicher ein zweiter Zeilenspeicher vorgeschaltet ist, welcher die Bildpunkte einer Zeile um zwei Takte verzögert an den ersten Bildpunktumgebungsspeicher übergibt.

Ein Rechner kann für die Gesamtfehlererfassung und -verwaltung sorgen. Weitere vorteilhafte Ausgestaltungen der Erfindung sind in den Unteransprüchen entsprechend unter Schutz gestellt.

Die Erfindung ist im folgenden anhand schematischen Zeichnungen näher erläutert. Es zeigen:

Fig. 1    (1) bis (7) typische Mikrofehler in Leiterbahnen auf Leiterplatten und
          (8) bis (14) typische Makrofehler;

Fig. 2    eine perspektivische, vereinfachte Ansicht einer Anordnung mit einer Aufnahmekamera und einem X-Y-Tisch zur Unterstützung einer zu überprüfenden Leiterplatte;

Fig. 3    eine Teildraufsicht auf eine zu überprüfende Leiterplatte mit Darstellung der Abmessungen eines in der Mikroprüfung zu überprüfenden Bildausschnittes und der Mikrobahnen, welche beim Aufnehmen von der Aufnahmekamera nach Fig. 2 überfahren werden;

Fig. 4    ein Grundschema einer Einrichtung gemäß der Erfindung;

Fig. 5    ein detaillierteres Schema der Einrichtung nach Fig. 4;

Fig. 6    die Darstellung einer Bausteinschaltung als Einzelheit aus Fig. 5;

Fig. 7    die schematische Darstellung einer Bildoperation bei der Mikroüberprüfung zur Bearbeitung eines Bildpunktes mit einer Bildverarbeitungseinheit gemäß Fig. 6;

Fig. 8    den schaltungstechnischen Aufbau der Bildverarbeitungseinheit gemäß Fig. 6 im einzelnen;

Fig. 9 bis 13 mit einem Verfahren gemäß der Erfindung bearbeitete Binärbilder in unterschiedlichen Bearbeitungsstufen, und

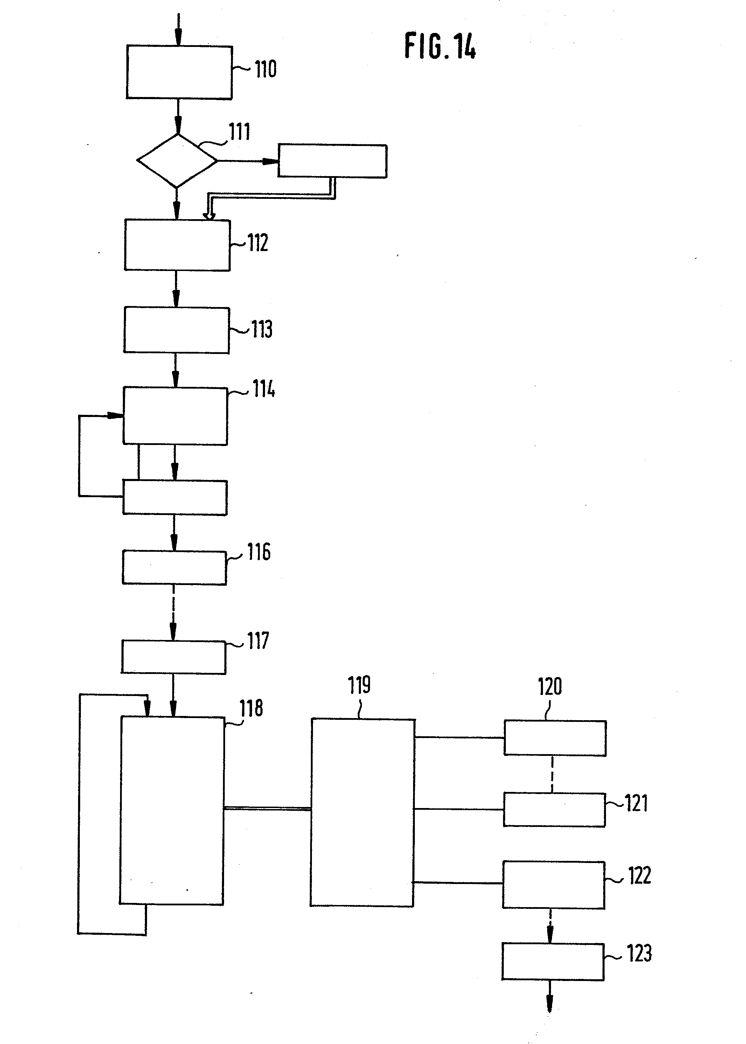

Fig. 14   ein Flußdiagramm für ein Verfahren gemäß der Erfindung.

Die Fehler bei Leiterplatten lassen sich generell in Mikrofehler und Makrofehler einteilen. Unter Mikrofehlern sind im folgenden solche Fehler verstanden, deren Ausmaße geringer als die minimal zugelassene Breite von Leiterbahnen und der minimal zugelassene Abstand dazwischen sind.

Unter Makrofehlern sind alle größeren Fehler als die Mikrofehler verstanden. Die zulässigen Maße für Mindestbreiten bei Leiterbahnen und Mindestabstände dazwischen liegen in der gleichen Größenordnung, nämlich in der Praxis zwischen 50μm und 100 μm.

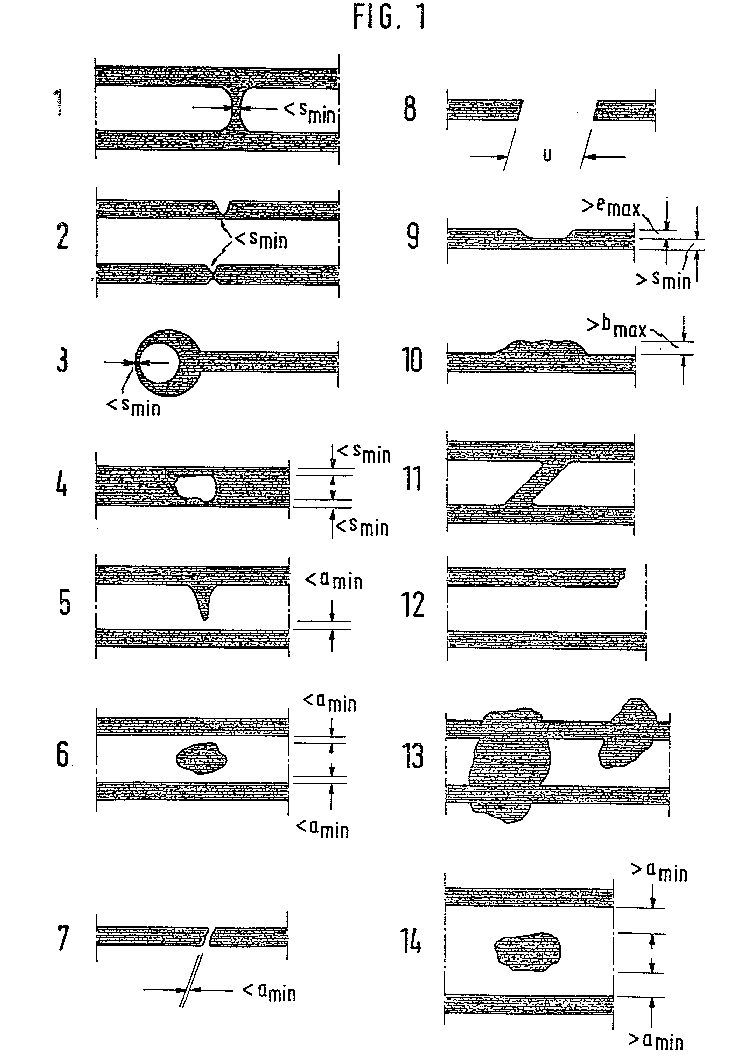

Die Mikrofehler lassen sich grundsätzlich in zwei Gruppen unterscheiden, nämlich eine Gruppe, in der die Kupferflächen der Leiterbahnen zu nahe aneinanderliegen, d.h. zu geringe Abstände haben, und eine andere Gruppe, in der die Kupferflächen in ihrem Verlauf zu dünn werden. Typische Mikrofehler sind in Fig. 1 (1) bis (7) dargestellt. Darin zeigt

    Fig. 1 (1) eine Kurzschlußbrücke,

    Fig. 1 (2) Einschnürungen in Leiterbahnen,

    Fig. 1 (3) einen Versatzfehler beim Bohren einer Durchkontaktierung,

    Fig. 1 (4) einen Einschluß in einer Leiterbahn,

    Fig. 1 (5) einen Auswuchs aus einer Leiterbahn,

    Fig. 1 (6) eine Einlagerung zwischen zwei Leiterbahnen,

    Fig. 1 (7) einen Haarriß in einer Leiterbahn.

Makrofehler haben grundsätzlich ähnliche Konfiguration, jedoch größere Abmessungen als die Mikrofehler. Typische Makrofehler sind in Fig. 1 (8) bis (14) dargestellt. Es zeigen:

    Fig. 1 (8) eine Unterbrechung in einer Leiterbahn,

    Fig. 1 (9) eine Verengung einer Leiterbahn, wobei jedoch die stehenbleibende Wandstärke grösser $s_{min}$ ist,

    Fig. 1(10) eine Verbreiterung,

    Fig. 1(11) eine Verbindung bzw. Kurzschlußbrücke einer Breite in der Größenordnung der Leiterbahnen,

    Fig. 1(12) ein abgebrochenes Leiterbahnende,

    Fig. 1(13) großflächige Störstellen,

    Fig. 1(14) eine Einlagerung, deren Abstände zu den benachbarten Leiterbahnen größer $a_{min}$ ist.

Die angegebenen Mindestmaße $s_{min}$, $a_{min}$, $e_{max}$, $b_{max}$ sind unmittelbar aus Fig. 1 heraus verständlich und deshalb nicht näher erläutert. Es sollen $s_{min}$, $a_{min}$ von 80µm; $e_{max}$, $b_{max}$ von 20% erfaßt werden.

Alle Fehler nach Fig. 1 sollen mit dem im folgenden beschriebenen Verfahren mit der Vorrichtung gemäß der Erfindung in kurzer Prüfzeit, d.h. bei einer Leiterplattengröße von 100 cm² ca. 10 bis 20 s je Leiterplatte, aufgefunden werden können.

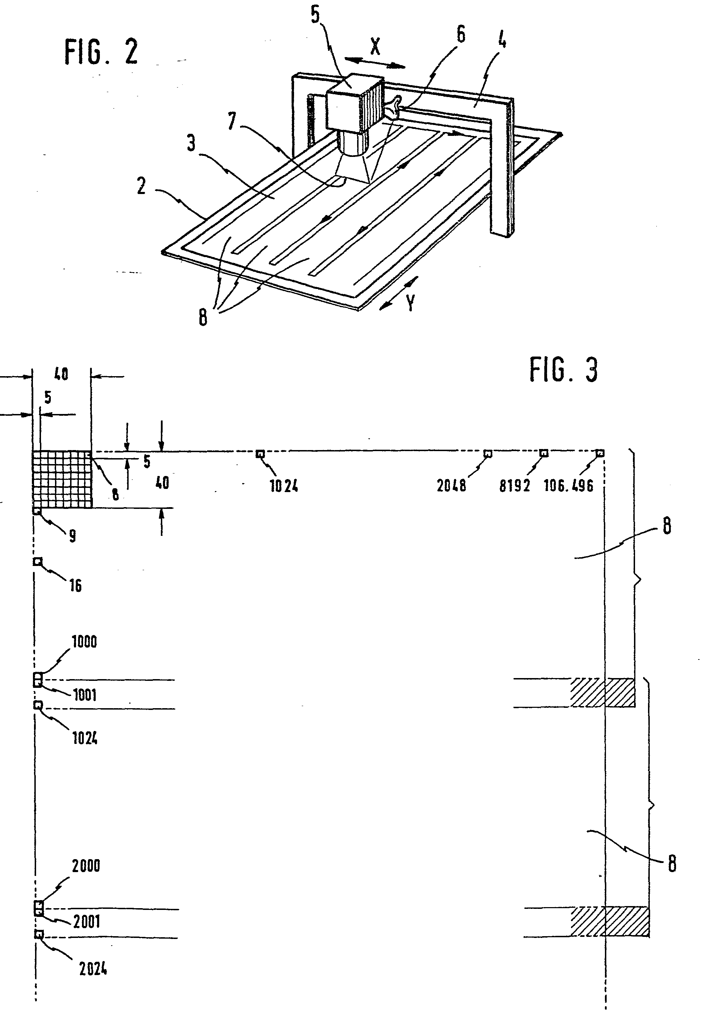

Fig. 2 zeigt eine Anordnung mit einem beweglichen Tisch 2, auf dem eine zu prüfende Leiterplatte 3 liegt. Über dem Tisch 2 ist an einer Traverse 4 eine CCD-Kamera (Charge Coupled Device) in X-Richtung beweglich angeordnet. Der Tisch ist in ± Y-Richtung an der Traverse 4 verfahrbar.

Statt einer CCD-Kamera könnte auch eine übliche Video-Kamera Verwendung finden.

Neben der Aufnahmekamera 5 ist eine Beleuchtungsvorrichtung 6 angeordnet, die mit der Kamera an der Traverse 4 verfahrbar ist. Die CCD-Aufnahmekamera nimmt eine Zeile 7 auf der Leiterplatte auf, wenn diese in Y-Richtung unter ihr vorbeifährt. Die Belichtungszeit der Aufnahmekamera wird getaktet und liegt bei maximal 200 µs bei 5 bis 10µ Auflösung und 50 mm/s Vorschub des Tisches in Y-Richtung. Die CCD-Kamera verfügt über eine Sensorzeile mit insgesamt 1024 Halbleitersensoren, die gleichzeitig während der Belichtungszeit belichtet werden und die Videosignale seriell an einen Ausgang übergibt.

Die Datenrate je Sensor beträgt dabei 10MHz gepulst für ca. 100 µs. Auf der zu prüfenden Leiterplatte 3 sind mit 8 die Abtastbahnen angedeutet, die von der CCD-Kamera überstrichen werden, wobei deutlich wird, daß eine X-Bewegung jeweils am Ende einer solchen Abtastbahn erfolgt.

Anstatt des Tisches 2 kann auch die Traverse 4 in ± Y-Richtung bewegt werden. Es kann auch die Aufnahmekamera 5 ortsfest sein und der Tisch 2 sowohl in X- als auch in Y-Richtung gesteuert bewegbar sein.

In Fig. 3 ist anhand der Teildraufsicht auf die Oberfläche der Leiterplatte 3 gezeigt, wie mit der Aufnahmeanordnung nach Fig. 2 gearbeitet wird. Links oben in Fig. 3 ist ein Bildfeld in 8 mal 8 Quadrate zu je 5 mal 5 µm aufgeteilt dargestellt. Ein Quadrat von 5 mal 5 µm entspricht einem Bildpunkt oder Pixel. Die senkrechte Anordnung von 1024 Bildpunkten wird zu einem Belichtungszeitpunkt mit der Aufnahmekamera 5 aufgenommen. Das Bildfeld mit den 8 mal 8 Quadraten hat eine Abmessung von 40 mal 40 µm. Die Breite einer Mikrobahn 8 entspricht infolgedessen 5 mal 1024 Quadraten einer Länge von je 5µ, d.h. 5120 µm. Aus Fig. 3 ist ersichtlich, daß die X-Bewegung der Aufnahmekamera gemäß Fig. 2 nur einer Länge von 1000 Quadraten oder Bildelementen, d.h. 5000 µm (= 5 mm) entspricht. Hieraus ergibt sich die in Fig. 3 dargestellte Überlappung der einzelnen Bahnen 8. Aufgrund dieser Überlappung wird gewährleistet, daß jeder Teil der Leiterplatte mit Sicherheit überprüft wird. Bei der im folgenden näher geschilderten Makroprüfung werden die in einem Bildfeld der Länge 40 mal 40 µm, wie es links oben in Fig. 3 gezeichnet ist, vorhandenen 64 Bildinformationen auf eine einzige Bildinformation reduziert.

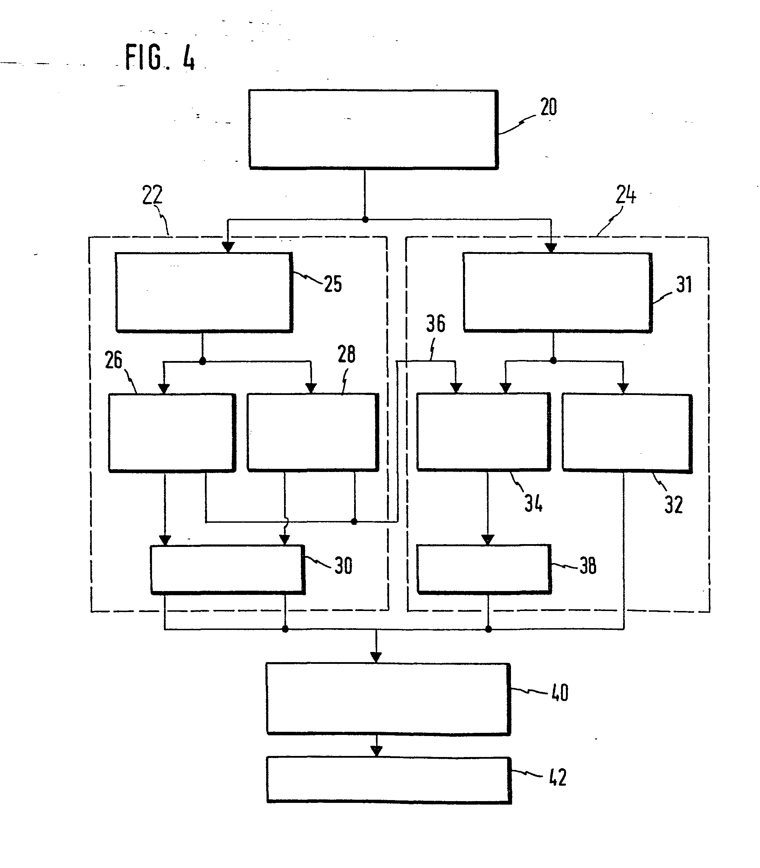

Fig. 4 zeigt ein funktionelles Grundschema einer Einrichtung zum opto-elektronischen Prüfen einer Leiterplatte oder eines anderen flächenhaften Gebildes, das mit einem zu prüfenden Muster versehen ist.

Die in Fig. 2 gezeigte Aufnahmeanordnung ist in Fig. 4 durch einen Kasten 20 dargestellt. Mit der Aufnahmeanordnung 20 aufgenommene Bild- oder Videosignale werden gleichzeitig einer Mikroprüfeinheit 22 und einer Makroprüfeinheit 24 zugeführt, die beide durch gestrichelte Kästen in Fig. 4 umrahmt sind.

In der Mikroprüfeinheit findet eine Mikroprüfung der Bildelemente mit einer Größe von 5 mal 5 μm gemäß Fig. 3 Bildpunkt für Bildpunkt statt, wobei dies durch einen Kasten 25 angedeutet ist. Dabei werden gleichzeitig in einer Abstandsprüfeinheit 26 und in einer Breitenprüfeinheit 28 Abstandsfehler und Breiten-bzw. Abmessungsfehler einer Größe zwischen 10 und 100 μm durch einen Vergleich Bildpunkt für Bildpunkt durch Differenzbildung mit entsprechenden Referenz-Bildpunkten verglichen. Das sich ergebende Restbild wird in einer Bildreinigungseinheit 30 "gereinigt", d.h. daraufhin überprüft, ob es einen "echten" Fehler repräsentiert oder nur aus verfahrensbedingten Abweichungen entstanden ist, ohne daß die Abstände oder Breiten über das zulässige Maß von den entsprechenden Sollwerten abweichen.

In der Makroprüfeinheit 24 wird das jeweils für ein 40 mal 40 μm-Bildfeld reduzierte Einzelbildsignal einer Makroprüfung unterzogen, was durch einen Kasten 31 angedeutet ist. Dabei wird in einem Vergleicher 32 ein direkter Vergleich mit entsprechender Referenz-Bildinformation angestellt und dadurch eine Aussage über Fehler in der Größenordnung von größer 100 μm gewonnen. Gleichzeitig kann die gewonnene Bildinformation wahlweise einer sogenannten "Geometrieprüfung" in einer Geometrieprüfeinheit 34 unterzogen werden, wobei geometrische Kriterien über den Verlauf (z.B. den Gradientenverlauf, die Gradlinigkeit oder dgl.) herangezogen werden, um den korrekten geometrischen Verlauf einer Leiterbahn zu überprüfen. Falls in den Einheiten 26,28 der Mikroprüfeinheit 22 keine verläßliche Aussage über den Fehler gewonnen worden ist, kann über eine Signalflußleitung 36 ein entsprechendes Signal aus den Einheiten 26,28 in die Geometrieprüfeinheit 34 eingegeben werden.

Schließlich wird in einer Kontrolleinheit 38 eine Kontrolle vorgenommen. Die Endresultate aus der Mikroprüfeinheit 22 und der Makroprüfeinheit 24 werden einer gemeinsamen Gesamtfehlererfassung 40, z.B. in Form eines Rechners, mit nachgeschalteter Ausgabe-/Anzeigeeinheit 42 zugeführt.

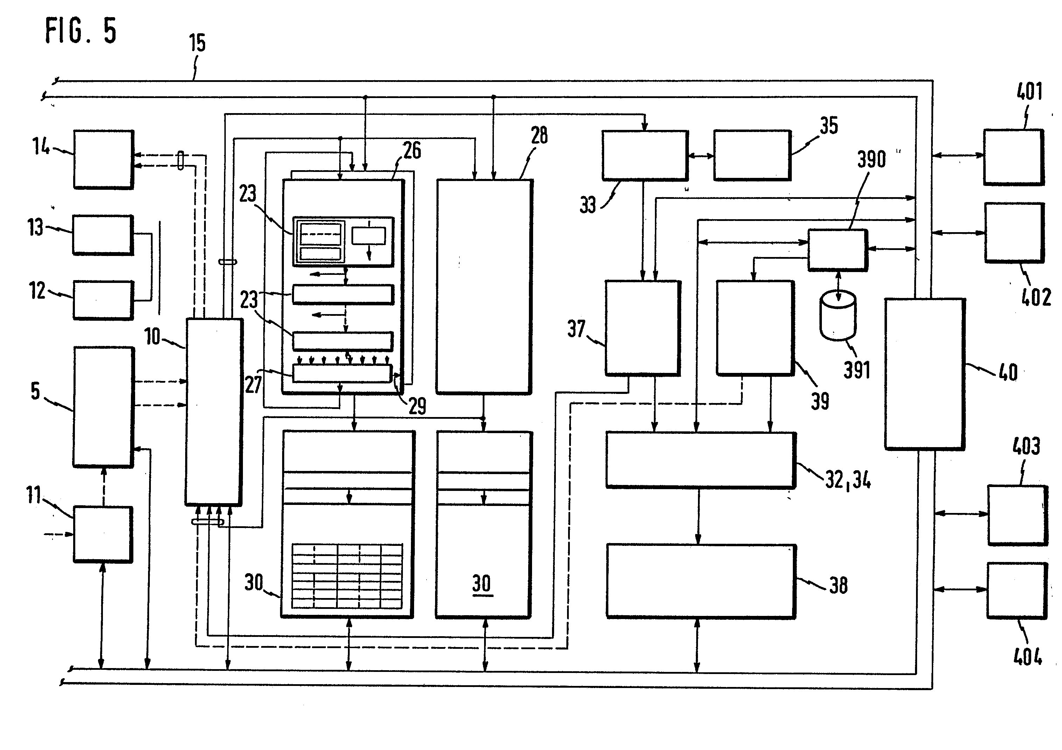

Fig. 5 zeigt ein detaillierteres Schema als Fig. 4, aus dem bereits das gerätetechnische Konzept einer Einrichtung zum opto-elektronischen Prüfen einer Leiterplatte oder eines anderen Flächenmusters aufscheint.

Im Prinzip folgt der Aufbau des Schemas nach Fig. 5 demjenigen nach Fig. 4. Es sind folglich, wo möglich, gleiche Bezugszeichen wie in Fig. 4 verwendet.

In dem links dargestellten Aufnahmeteil der Einrichtung gibt die CCD-Kamera 5 Video-Steuersignale und Videobinärsignale an eine Video-Bus-Steuerung 10 ab, die über digitale Videobusse mit den nachgeschalteten Bausteinen der Mikroprüfeinheit 22 und der Makroprüfeinheit 24 sowie dem Rechner 40 in Verbindung steht. Dieser Rechner ist seinerseits in einen Daten-Bus 15 eingeschaltet, der für die Koordination der Fehlerbearbeitung, der Fehlermarkierung im Bild, der Fehlerzusammenfassung, den Datentransfer und die Bedienerkommunikation zuständig ist.

Zwischen beweglichem Tisch und CCD-Kamera 5 ist ein Interface 11 eingebaut, daß ebenso wie die Kamera 5 und die Video-Bussteuerung 10 an den Daten-Bus angeschlossen ist. Zusätzlich kann eine TV-Kamera 12 mit einem Monitor 13 vorgesehen sein. Ferner kann eine TV-Anzeige 14 an die Video-Bussteuerung 10 angeschlossen sein.

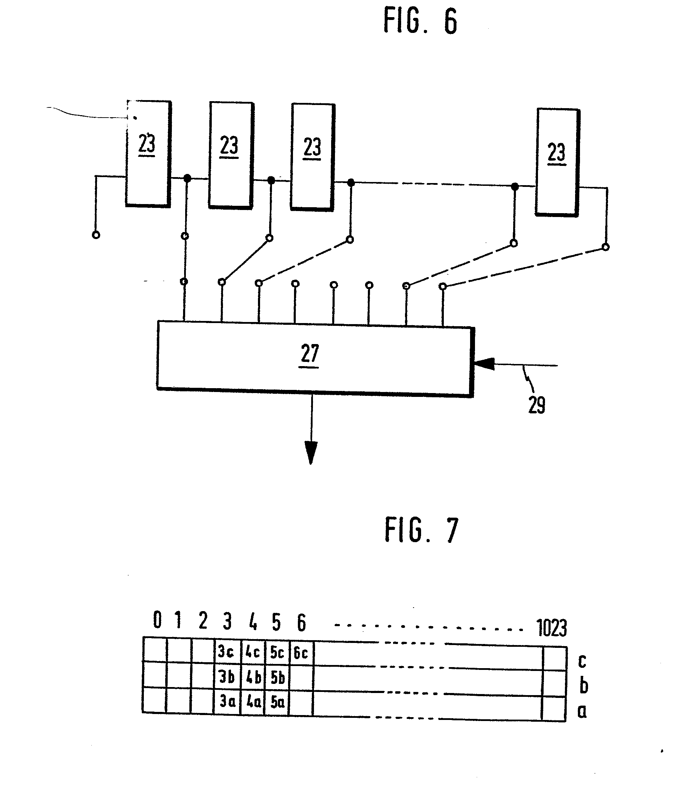

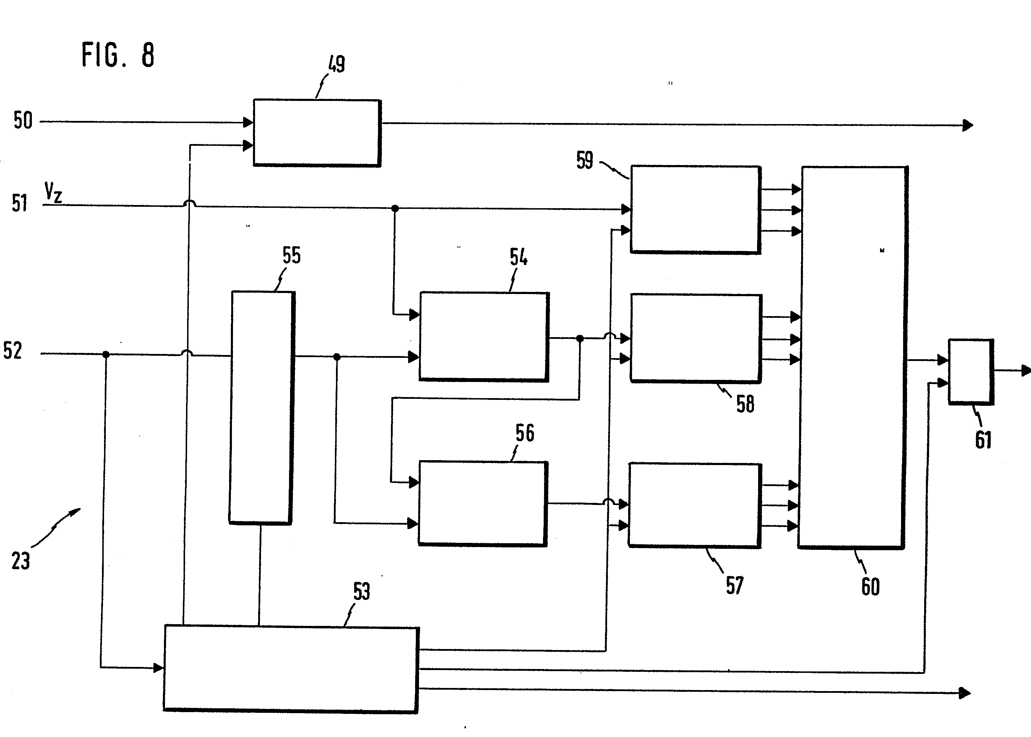

Die Abstandsprüfeinheit 26 und die Abmessungs-Prüfeinheit 28 sind über digitale Video-Busse an die Video-Bus- steuerung 10 angeschlossen. Jede Einheit 26,28 enthält 8 Bildverarbeitungseinheiten 23, die in Reihe geschaltet sind und alle gleich entsprechend der nachfolgenden Erläuterung anhand Fig.8 aufgebaut sind. Diese Bildverarbeitungseinheiten liefern je ein Ausgangssignal an einen Multiplexer 27. Im einzelnen ist dies der größeren Klarheit halber nochmals in Fig. 6 dargestellt. Jeder Multiplexer 27 hat einen Eingang 29 vom Rechner 40, über den die Auswahl der Bildoperationen eingespeist wird. Im Multiplexer 27 werden aus den Bildsignalen, die aus den Bildverarbeitungseinheiten 23 empfangen werden, aus den bearbeiteten Bildsignalen $V_z'$ und den unveränderten, aufgenommenen Bildsignalen $V_{Orig}'$ (s.Fig.8) Differenzbildsignale erzeugt. Diese Differenzbildsignale werden jeweils einer gleich aufgebauten Bildreinigungseinheit 30 zugeführt, in der außer einer Bildreinigung eine Bildauswertung, Berechnung und Übergabe der Fehlerkoordinaten X,Y stattfindet, wie in Fig. 5 angedeutet ist.

Zur Makroprüfung werden die von der Video-Bussteuerung 10 ausgehenden Videosignale einer Grobrastereinheit 33 zugeführt, die mit einem temporären Speicher 35 für n-1 Scanbahnen im Dialog steht. Die Grobrastereinheit 33 steht mit einem Makrospeicher 37 zur Bearbeitung mehrerer Scanbahnen in Verbindung. Ein Referenzspeicher 39, der an eine Referenzbildverwaltung 390 mit angeschlossenem Massenspeicher 391 für Referenz-Leiterplatten an dem Daten-Bus angeschlossen ist, enthält entsprechende Referenz-Bildinformationen.

Für die Makroprüfung werden die Ausgangssignale aus dem Makrospeicher 37 aus dem Referenzspeicher 39 in einem die Vergleichseinheit 32 und die Geometrieprüfeinheit 34 zusammenfassenden Baustein untersucht. Es schließt sich eine Makroauswerteinheit 38 zur Berechnung und Übergabe von Fehlerkoordinaten an den Rechner 40 an.

0149852

Zusätzlich sind an den Daten-Bus eine Monitor-/Bediener-einheit 401, ein Einstellspeicher 402 für Leiterplatten-daten wie Formen und Toleranzen, ein Software-Baustein 403 für Fehleralgorithmen und ein Arbeitsspeicher 404 angeschlossen.

Im folgenden ist der Aufbau einer Verarbeitungseinheit 23 im einzelnen anhand der Fig. 8 erläutert. Vorab sei aber zur Erleichterung des Verständnisses anhand der Fig. 7 erläutert, wie mit einer Bildverarbeitungseinheit nach Fig. 8 gearbeitet wird.

Jede Bildverarbeitungseinheit 23 erhält nacheinander zeilenweise digitalisierte Videosignale für eine Vorläuferzeile a, eine aktuelle Zeile b und eine Nachfolgerzeile c.. Es soll ein Bildpunkt in der aktuellen Zeile b bearbeitet werden, und zwar der Bildpunkt 4b gemäß Fig. 7. Dann werden sämtliche ihn umgebende Bildpunkte 3a, 4a, 5a in der Vorläuferzeile a, die ihm in der gleichen Zeile benach-barten Punkte 3b, 5b und die in der Nachfolgerzeile lie-genden Bildpunkte 3c, 4c, 5c zur Betrachtung herangezogen. Der Bildpunkt 4b wird dadurch bearbeitet, daß er einer Dilatation oder Erosion unterzogen wird. "Dilatieren" bedeutet, daß ein Bildbereich einer bestimmten Helligkeit dadurch verbreitert wird, daß der zu bearbeitende Bildpunkt auf die gleiche Helligkeit gesetzt wird, wenn mindestens einer seiner Nachbarn diese Helligkeit hat.
"Erodieren" bedeutet, daß man einen Bildbereich einer bestimmten Helligkeit dadurch schrumpfen läßt, daß der zu bearbeitende Bildpunkt aus diesem Helligkeitsbereich herausgenommen (gelöscht) wird, wenn mindestens einer seiner Nachbarn nicht die bestimmte Helligkeit hat.
Im einfachsten Fall genügt es, ausschließlich die Helligkeiten "Schwarz" und "Weiß" zu verwenden , so daß eine binäre Verarbeitung ausreichend ist.

Wendet man mehrfach eine solche Dilatation und eine entsprechende Anzahl von Erosionen an, so erhält man bei Anwendung der Reihenfolge Dilatationen gefolgt von einer gleichen Anzahl von Erosionen einen "Lochschließeffekt", d.h. eine Erkennung von Rissen, Spalten, zu dichten Abständen und dgl. Man nennt diese Kombination aus Dilatation gefolgt von einer gleichen Anzahl von Erosionen eine "Fermature". Wendet man die Reihenfolge Erosionen gefolgt von einer gleichen Anzahl von Dilatationen an, so erhält man einen "Lochöffnungseffekt", d.h. eine Erkennung von Einschnürungen, zu dünnen Leiterbahnen und dgl. Eine solche Folge nennt man "Ouverture".

Die eigentliche Erkennung wird erst durch ein Vergleichen des bei einer Fermature oder Ouverture erkannten Bildes mit dem zugehörigen Originalbild ermöglicht. Verfahrensbedingt ist das Ergebnis bei einer Fermature und einer Ouverture auch bei korrekten Abmessungen nicht notwendig gleich. Bei dem zum Vergleich erzeugten Differenzbild das im Falle korrekter Abmessungen verschwinden müßte, bleiben deshalb Reste stehen. Dies ist der Grund dafür, daß eine Bildreinigung auf jedes erhaltene Differenzbild angewendet werden muß. Die Bildreinigungseinheit 30 muß zwischen "unechten" Differenzbildern, - es liegt kein Fehler vor -, und "echten" Differenzbildern unterscheiden können. Als Klassifizierungskriterium kann z.B. dienen, daß die Restbild-Punktmenge im Restbild zusammenhängend in beiden Achsen-Richtungen einen bestimmten Grenzwert (z.B. größer zwei Bildpunkte in beiden Achsenrichtungen) übersteigt. In diesem Fall liegt ein echter Fehler vor.

Im folgenden ist der Aufbau einer Bildverarbeitungseinheit 23 im einzelnen gezeigt, mit dem je eine Bildoperation an einem Bildpunkt wie oben erläutert durchgeführt werden kann.

Die Bildverarbeitungseinheit 23 gemäß Fig. 8 hat drei Eingänge 50,51,52 für ein unverändertes digitales Videosignal $V_{Orig}$, ein jeweils zu bearbeitendes Videosignal $V_z$ und ein Taktsignal "Clock". Das Videosignal $V_{Orig}$ wird über einen Verzögerungsbaustein 49 entsprechend der Bearbeitungszeit des Signals $V_z$ verzögert. Das zu bearbeitende Videosignal $V_z$ wird einem ersten Zeilenspeicher 54 zugeführt. Dieser wird durch eine Taktadresse zu einer Verzögerung um einen Takt von einem Adresszähler 55 angesteuert, der das Taktsignal 52 als Eingangssignal erhält und von 0 bis 1023 entsprechend der Signalanzahl pro Sensorzeile der CCD-Kamera zählt. Der erste Zeilenspeicher 54 schiebt also die einer Bildzeile mit 1024 Bildpunkten entsprechenden Bildsignale nach Art eines Schieberegisters, jedoch um einen Zeilentakt verzögert, weiter. Der Ausgang des Zeilenspeichers 54 ist mit dem Eingang eines zweiten Zeilenspeichers 56 verbunden, der ebenfalls vom Adresszähler 55 adressiert ist und folglich wiederum die empfangenen Bildsignale um einen Zeilentakt verzögert, insgesamt also für eine zweimalige Verzögerung gegenüber den laufenden Werten $V_z$ sorgt. Es sind insgesamt drei Bildpunkt-Umgebungsspeicher 57,58,59 vorgesehen. Der erste Bildpunkt-Umgebungsspeicher 57 ist an den zweiten Zeilenspeicher 56 angeschlossen und speichert jeweils drei Bildpunkt-Umgebungspunkte der zweimal verzögerten Zeile, d.h. der Vorläuferzeile a. Der zweite Bildpunkt-Umgebungsspeicher ist an den ersten Zeilenspeicher 54 angeschlossen und speichert jeweils drei benachbarte Bildpunkte in der aktuellen Zeile b. Der dritte Bildpunkt-Umgebungsspeicher 59 schließlich, der unmittelbar mit dem Eingang 51 in Verbindung steht, d.h. zu dem laufenden Signal $V_z$ gespeist wird, speichert drei benachbarte Bildpunkte in der Nachfolgerzeile c.

Alle drei Bildpunkt-Umgebungsspeicher 57,58,59 sind mit drei Ausgängen entsprechend den drei gespeicherten Bildpunkten an einen Verknüpfungsspeicher 60 angeschlossen, in dem die erläuterte Bildoperation an dem mittleren Punkt 4b durchgeführt wird, d.h. ein Signal gesetzt oder gelöscht wird. Der sich ergebende Ausgangswert wird über einen Puffer 61 an die nächste Bildverarbeitungseinheit 23 bzw. an den Multiplexer 27 gemäß Fig. 6 zur weiteren Bildbearbeitung, d.h. zur Differenzbildung aus $V_z$ und $V_{Orig}$ übergeben.

0149852

Mit der beschriebenen Einrichtung lassen sich in Echtzeit die beschriebene Mikroprüfung (Untersuchung von Bildelementen einer Größe von 5 mal 5 μm) und eine Makroprüfung (Untersuchung von Bildfeldern einer Größe von 40 mal 40 μm) nebeneinander mit vergleichsweise großer Schnelligkeit durchführen. Ein Rechner ist für die Bildbearbeitung nicht notwendig erforderlich; es kann genügen, die sich bei der Makroprüfung und bei der Mikroprüfung ergebenden Ergebnisse einer X-/Y-Koordinatenanzeige oder Registrierung zuzuführen. Zur Verwaltung und Verarbeitung der Fehler ist aber die Zusammenschaltung mit einem Rechner in der beschriebenen Weise sinnvoll.

Sollen häufig Leiterplatten unterschiedlicher Struktur untersucht werden, so ist es zweckmäßig, den Massenspeicher 391 jeweils neu im Teach-in-Verfahren mit Bildinformationen einer entsprechenden fehlerfreien Referenz-Leiterplatte zu programmieren.

Das im folgenden beschriebene Verfahren dient dem schnellen Auffinden, d.h. mit Bilddurchlauffrequenz oder etwa 10 MHz Bildpunktfrequenz, von Breitenschwankungen beliebiger, im Normalfall linienartiger Strukturen, insbesondere solcher Bildstrukturen, wie sie auf Leiterzugplatten bzw. gedruckten Schaltungen für Elektronikgeräte verwendet werden.

Das Verfahren setzt sich grundsätzlich aus drei Schritten zusammen, und zwar aus der

(1) Aufbereitung des von der Aufnahmekamera 5 (Fig.2) bereitgestellten Binärbildes zu einem Pseudo-Graubild, in dem die Grauwerte ein Maß für den Abstand zur Kontur des ursprünglichen Binärbildes darstellen.

(2) Reduzierung des Pseudo-Graubildes auf Linien maximalen Grauwertes und

(3) Verfolgung der Linien nach Schritt (2) und Markierung unzulässiger Grauwertschwankungen.

Der Begriff des "Grauwertes" bzw. des "Graubildes" entspricht dabei keineswegs irgendwelchen Helligkeitswerten des Originalbildes. Diese Begriffe wurden nur deshalb gewählt, weil eine der Darstellungsmöglichkeiten von Linien gleichen Abstandes der Binärbildkontur auf einem Datensichtgerät die Verwendung unterschiedlicher Grauwerte ist.

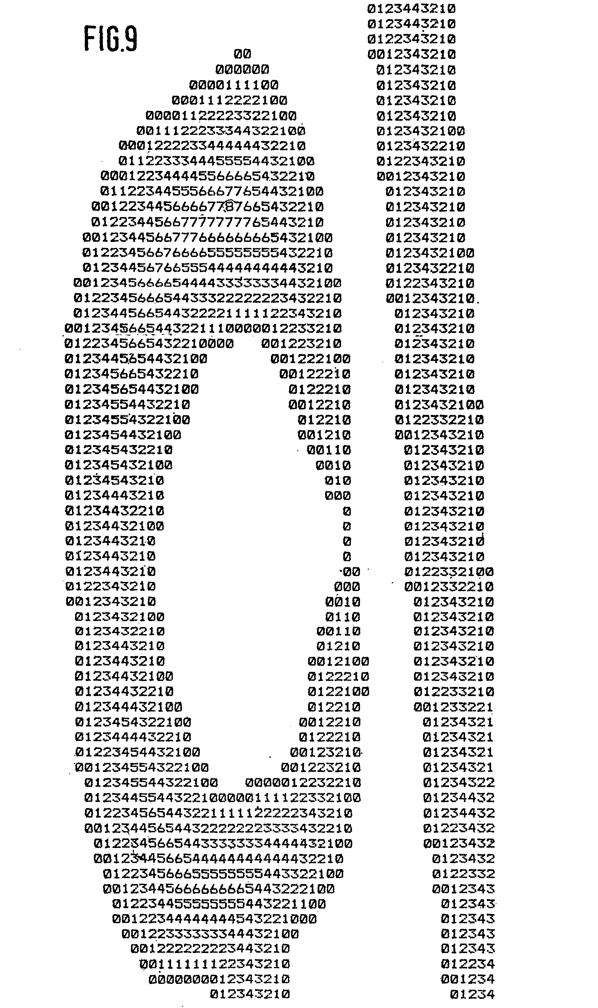

Fig. 9 veranschaulicht, was mit der Aufbereitung des Binärbildes gemäß Schritt (1) gemeint ist. Dort ist jeder Binärbildpunkt durch eine Ziffer zwischen 0 und 8 markiert. Der Wert der Ziffer gibt den Abstand zur Kontur an, d.h. 0 bedeutet "Randpunkt", während 8 den größten vorhandenen Abstand zum Rand markiert.

Das Binärbild wird nach folgender Vorschrift aufbereitet:

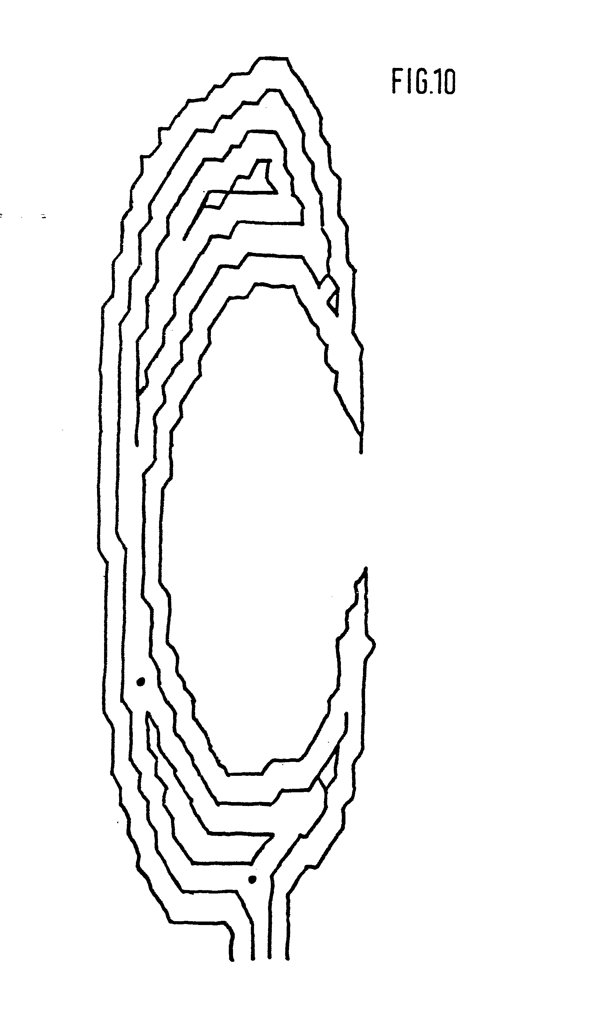

Mit Hilfe von Look-Up-Operationen (LUT-Operationen) wird eine bestimmte Anzahl von Erosionen durchgeführt. Die Verarbeitungs-Look-Up-Table (LUT) ist so ausgelegt, daß die Ergebnispunkte mit einem Grauwert belegt werden, der auf die Laufnummer der Erosion schließen läßt. Z.B. erhalten bei der 3. Erosion die Punkte den Grauwert 3, bei der 4. Erosion den Grauwert 4 usw. Hierdurch entstehen in dem Bild Folgen von Bildpunkten gleichen Grauwerts, die durch Verbinden Linienzüge in der Art von "Höhenlinien" bei Landkarten ergeben. Fig. 10 zeigt für einen Ausschnitt von Fig. 9 die Höhenlinien mit den Grauwerten 1,3,5 und 7 (die dazwischen liegenden Höhenlinien wurden der Übersichtlichkeit wegen nicht eingezeichnet). Die Grauwerte der Punkte sind ein Maß für den Abstand der Punkte zur Außenkontur in Bildpunkten. Sind alle Erosionen durchgeführt und weitere unbearbeitete Punkte vorhanden, werden diese mit einem bestimmten Grauwert markiert. Diese Grauwertmarkierung zeigt an, daß z.B. an dieser Stelle eine Breitenuntersuchung nicht mehr nötig ist, weil dieser Abschnitt die geforderte Mindestbreite aufweist. Die Breitenuntersuchung ist nicht auf die Anzahl 8 - wie in dem Beispiel in Fig. 9 - beschränkt, sondern kann grundsätzlich beliebig weit getrieben werden. Im konkreten Fall wird allerdings an einer sinnvollen Stelle, z.B. bei Erreichen einer vorgegebenen Mindest- oder Maximalbreite, abgebrochen.

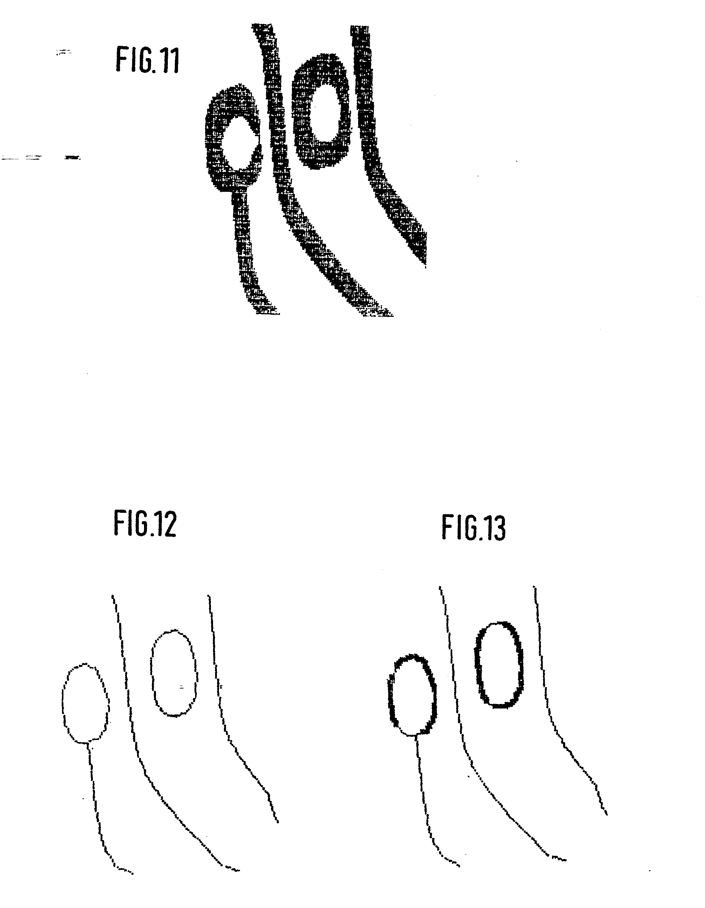

Im Schritt (2) wird das "Graubild" auf seine "Gratlinien" reduziert. Dabei werden die "Höhenlinien" nacheinander von außen nach innen abgearbeitet. Bei jedem Durchlauf wird ein Teil der Punkte der bearbeiteten "Höhenlinie" gelöscht, was für die weitere Verarbeitung ohne Bedeutung ist. Das Ergebnis ist eine einzige durchgehende Linie (Fig. 12). Die Grauwerte der Linienpunkte der Gratlinie sind ein Maß für den Abstand Punkt-Außenkontur, und zwar näherungweise in Richtung der Senkrechten von Außenkontur zu Bildpunkt.

Fig. 11 gibt das den Fig. 9 und 10 zugrundeliegende Ausgangsbild in binärer Darstellung wieder, wobei hier jeder Bildpunkt ebenfalls durch einen Punkt dargestellt ist. Fig. 12 zeigt die "Gratlinie", die mit ihren Grauwerten nun der weiteren Bearbeitung gemäß Schritt (3) unterworfen wird.

In diesem Schritt werden die entstandenen "Gratlinien" gemäß Fig. 12 Punkt für Punkt abgetastet und Veränderungen der eingeschriebenen Grauwerte und damit der Breiten der zu prüfenden Objekte bzw. Strukturen untersucht. Die Gratlinien werden in Abschnitte unterteilt. Ein Linienabschnitt verläuft von einem Anfangspunkt (offenes Linienende) oder einem Verzweigungspunkt
(Treffpunkt mehrerer Linien) bis zu einem anderen
Anfangspunkt oder Verzweigungspunkt. Alle Linienabschnitte werden getrennt untersucht; die Verbindung
zu anderen Linienabschnitten ist unwichtig. Bei der
punktweisen Abtastung der Linie wird jeweils die
Differenz der Grauwerte von zwei aufeinanderfolgenden
Punkten gebildet. Ist die Differenz 0, so wird die
Linie in diesen Punkten als "stetig" bezeichnet.
Ist die Differenz nicht 0, wird sie als "unstetig"
bezeichnet. Aufgrund der Länge von stetigen bzw.
unstetigen Linienstücken, der maximalen Abweichung
vom Ausgangwert und der kumulierten Differenzen wird
gegebenenfalls ein Teil der Linie und damit auch
das zugehörige Stück des Objektes als fehlerhaft
markiert.

Die Kriterien, nach denen entschieden wird, ob es
sich um ein fehlerhaftes Stück handelt oder nicht,
können von Prüfling zu Prüfling variieren und müssen
jeweils im einzelnen festgelegt werden. Bei geeigneter
Auswahl der Kriterien läßt sich das Beispiel nach
Fig. 11, bei dem es sich um Leiterbahnen und Lötaugen
handelt, mit dem Ziel bearbeiten, in der Breite der
Lötaugen unzulässig starke Schwankungen festzustellen.

Fig. 13 zeigt als Beispiel, daß die Schwankungen
in der Breite nicht akzeptabel sind. Dies wird gemäß
Fig. 13 dem Benutzer durch Verbreiterung der Gratlinie
deutlich gemacht.

Im folgenden ist anhand des Flußdiagramms gemäß Fig.
14 erläutert, wie mit dem vorbeschriebenen Verfahren
und einer Einrichtung gemäß der Erfindung Breitenänderungen geometrischer Strukturen mittels einer erfindungsgemäßen Folge von Binär-Bildoperationen gefunden
werden können.

In einer Makroprüfeinheit entsprechend der Makroprüfeinheit 24 gemäß Fig. 4 wird der aufbereitete Schwarzweiß-Bildstrom um den Faktor K = 3 bis 15 verdichtet.
Dies wird dadurch erreicht, daß zuerst jede Aufnahme
(Zelle) um K in einem Baustein 110 komprimiert wird
(Fig. 9). Aus den K-Bildpunkten wird jeweils durch
Mehrheitsentscheid bei 111 ein Weiß- oder Schwarzpunkt ermittelt. Danach werden auf diese Weise K-komprimierte Aufnahmen bei 112 zusammengefaßt und wiederum nach Mehrheitsentscheid zu einer Aufnahme verdichtet.

Die Überlappung zwischen den Scans (für die Mikroprüfung notwendig) wird in einem Baustein 113 ausgeblendet.

Die komprimierten Aufnahmen werden in einem Scanspeicher 114 zu einem kompletten Scan zusammengefaßt.
Der Scanspeicher 114 besitzt zwei identische Bereiche,
die alternativ die komprimierten Daten sammeln bzw.
Daten zur Weiterverarbeitung anbieten. Aufgrund dieser
Zwischenpufferung werden die nachfolgenden LUT-Operationen unabhängig vom Zeitraster der Aufnahmen und
Abtastrichtung.

Nach Beendigung des Scan-Vorganges beginnt die Umsetzung der Binär-Bildinformation in ein Graubild durch
einen ersten LUT-Operator 116. In einem Scan-Ausleser
115 werden die Bildinformationen vor der Weitergabe
an den ersten LUT-Operator 116 von insgesamt i LUT-Operatoren ausgelesen.

Mit Hilfe einer Folge von LUT-Operatoren, von denen
der letzte mit 117 bezeichnet ist, werden die Grauwerte
zur Ermittlung der "Höhenlinien" gemäß Fig. 9 und
10 bestimmt. Die Anzahl der Grauwerte (Höhenlinien)
hängt von der Breite der zu verarbeitenden Objekte
ab. Davon abhängig ist auch die Anzahl i der LUT-Operatoren, d.h. nach i Operatoren kann die sequentielle Verarbeitung verlassen werden.

Das so erzeugte Grauwert-Bild wird in einem Scrollspeicher (118) abgelegt. Auf diesen Bereich greifen weitere LUT-Operatoren über eine Speicherverwaltung 119 zu und reduzieren das Pseudo-Graubild auf Linien maximaler Grauwerte. Diese Verarbeitung benötigt n LUT-Operatoren, von denen der erste n - 1 mit 120 und der letzte mit 121 bezeichnet ist.

Hauptsächlich dient der Scrollspeicher 118 der Verfolgung der Grauwertlinien, um unzulässige Schwankungen zu markieren. Um diese Linien mittels einer Bildverfolgungs- und -auswertvorrichtung 122 verfolgen zu können, muß der Scrollspeicher 118 einen möglichst großen Bildausschnitt abdecken.

Ist die Bildmarkierung abgeschlossen, werden die Koordinaten und die Größen der markierten Flächen im Baustein 123 ermittelt und an einen übergeordneten Rechner zur Weiterverarbeitung übergeben.

Dr.-Ing. Roland Liesegang

**0149852**

Sckellstrasse 1
D-8000 München 80
Telefon (089) 4 48 24 96

Telex 5214382 pali d
Telekopierer (089) 27 20 4 80, 27 20 4 81
Telegramme patemus münchen

Postscheck München 394 18-802
Hypobank München 6 400 194 333
Reuschelbank München 2 603 007

DR.-ING. LUDWIG PIETZSCH GMBH & CO.
Ettlingen, Bundesrepublik Deutschland

Verfahren und Einrichtung zum opto-elektronischen
Prüfen eines Flächenmusters an einem Objekt

Ansprüche

1. Verfahren zum opto-elektronischen Prüfen eines Flächenmusters an einem Objekt, insbesondere einer Leiterplatte, wobei das Flächenmuster zeilenweise aufgenommen und die aufgenommenen Bildelemente nach einer Bearbeitung mit korrespondierenden Bildelementen eines Referenzbildes verglichen werden, dadurch g e k e n n z e i c h n e t, daß eine Mikroprüfung vorgenommen wird, indem die zeilenweise aufgenommenen Bildelemente Bildpunkt für Bildpunkt einer Folge von Bildoperationen unterzogen und das jeweilige Ergebnis mit dem korrespondierenden aufgenommenen Bildpunkt verglichen wird, und daß gleichzeitig eine Makroprüfung vorgenommen wird, indem die aufgenommenen Bildpunkte in Bildfeldern zusammengefaßt und jeweils auf eine einzige, für das betreffende Bildfeld charakteristische Bildinformation reduziert werden, worauf jede Bildinformation mit der charakteristischen Bildinformation des korrespondierenden Referenz-Bildfeldes verglichen und/oder anhand vorgegebener geometrischer Kriterien überprüft wird.

2. Verfahren nach Anspruch 1, dadurch g e k e n n - z e i c h n e t, daß bei den Bildoperationen in der Mikroprüfung Bildpunkt für Bildpunkt jeweils in Abhängigkeit von den umgebenden Bildpunkten in den beiden Nachbarzeilen und in der gleichen Zeile schrittweise gesetzt oder gelöscht werden.

3. Verfahren nach Anspruch 1 oder 2, dadurch g e - k e n n z e i c h n e t, daß die charakteristische Bildinformation in der Makroprüfung durch Mehrheitsentscheid gewonnen wird.

4. Verfahren nach einem der Ansprüche 1 bis 3, dadurch g e k e n n z e i c h n e t, daß die Bildoperationen eine Folge von Dilatationen und Erosionen jedes Bildpunktes in Abhängigkeit von den ihn umgebenden Bildpunkten umfaßt, wobei die Reihenfolge "Dilatationen vor Erosionen" zur Abstandsprüfung der Abstände zwischen einzelnen Leiterbahnen oder dgl. und die Reihenfolge "Erosionen vor Dilatationen" zur Abmessungsprüfung der Abmessungen von Leiterbahnen oder dgl. verwendet werden.

5. Verfahren nach einem der Ansprüche 1 bis 4, dadurch g e k e n n z e i c h n e t, daß ein aufgenommenes Binärbild zu einem Pseudo-Graubild verarbeitet wird, in welchem die Grauwerte ein Maß für den Abstand zur Kontur des ursprünglichen Binärbildes darstellen, daß das Pseudo-Graubild auf Linien maximaler Grauwerte reduziert wird und daß die Linien maximaler Grauwerte verfolgt und
unzulässige Grauwertschwankungen markiert werden.

6. Verfahren nach einem der Ansprüche 1 bis 5, dadurch
g e k e n n z e i c h n e t, daß ein im Vergleich
bei der Mikroprüfung gewonnenes Restbild einer
Bildreinigung unterzogen wird.

7. Einrichtung zum opto-elektronischen Prüfen eines
Flächenmusters an einem Objekt, insbesondere einer
Leiterplatte, mit einer Aufnahmekamera zur zeilenweisen Aufnahme des Objektes, einem X-Y-Tisch
zur Unterstützung des Objektes, der ein relatives
Verfahren des Objektes gegenüber der Aufnahmekamera
zuläßt, und einem Bildverarbeitungsgerät, in welchem Bildoperationen zur Fehlererfassung durchgeführt werden, dadurch g e k e n n z e i c h n e t,
daß das Bildverarbeitungsgerät eine Mikroprüfeinheit (22) und eine dazu parallel geschaltete Makroprüfeinheit (24) umfaßt, die als Eingänge in digitale Signale umgewandelte Ausgangssignale der
Aufnahmekamera (5) erhalten.

8. Einrichtung nach Anspruch 7, dadurch g e k e n n-
z e i c h n e t, daß die Mikroprüfeinheit (22)
eine Anzahl von in Reihe geschalteten Bildverarbeitungseinheiten (23) in zwei parallelgeschalteten
Gruppen (26,28) enthält, wobei jede Bildverarbeitungseinheit der einen Gruppe für eine Dilatation
mit nachfolgender Erosion eines jeden Bildpunktes
zur Abstandsprüfung und jede Bildverarbeitungseinheit der zweiten Gruppe für eine Erosion mit nachfolgender Dilatation zur Abmessungsprüfung ausgelegt ist, daß die Mikroprüfeinheit (22) außerdem

0149852

einen Vergleichsbaustein (27) aufweist, in welchem aus den bearbeiteten Ausgangssignalen der Bildverarbeitungseinheiten (23) und den unveränderten, aufgenommenen Bildsignalen die Differenz gebildet wird, und daß die Mikroprüfeinheit eine Bildreinigungseinheit (30) zum Bearbeiten der Differenzsignale aus dem Vergleichsbaustein (27) aufweist.

9. Einrichtung nach Anspruch 7 oder 8, dadurch g e - k e n n z e i c h n e t, daß jede Bildverarbeitungseinheit (23) drei Bildpunkt-Umgebungsspeicher (57,58,59) je für eine von drei benachbarten Zeilen aufweist, von denen der erste (57) drei Bildpunkte in einer Vorläuferzeile (a), der zweite (58) drei Bildpunkte in einer aktuellen Zeile (b) mit dem zu bearbeitenden Bildpunkt in der Mitte und der dritte drei Bildpunkte in einer Nachfolgerzeile (c) speichert, und daß jeder Bildpunkt-Umgebungsspeicher drei Ausgänge aufweist, die zu einem Verknüpfungsspeicher (60) geführt sind, in welchem an dem zu bearbeitenden Bildpunkt in Abhängigkeit von den acht Umgebungs-Bildpunkten eine Bildoperation "Löschen" oder "Setzen" ausgeführt wird, und daß ferner ein Verzögerungsbaustein (49) zum Verzögern des aufgenommenen, unveränderten Bildsignals ($V_{Orig}$) vorgesehen ist.

10. Einrichtung nach Anspruch 9, dadurch g e k e n n - z e i c h n e t, daß dem zweiten Bildpunktumgebungsspeicher (58) ein erster Zeilenspeicher (54) vorgeschaltet ist, welcher die Bildpunkte einer Zeile um einen Takt verzögert an den zweiten Bildpunkt-Umgebungssspeicher (58) übergibt und daß dem ersten Bildpunkt-Umgebungsspeicher (57) ein zweiter Zeilenspeicher (56) vorgeschaltet ist, welcher die Bildpunkte einer Zeile um zwei Takte verzögert
an den ersten Bildpunkt-Umgebungsspeicher übergibt.

11. Einrichtung nach einem der Ansprüche 7 bis 10,
dadurch g e k e n n z e i c h n e t, daß die Makroprüfeinheit (24) eine Grobrastervorrichtung (33),
in welcher aus mehreren Bildpunkten eines Bildfeldes nach Mehrheitsentscheid eine für das ganze
Bildfeld charakteristische Bildinformation "Hell"
oder "Dunkel" gebildet wird, einen Makrospeicher
(37) für die genannte Bildinformation, einen Referenzspeicher (39) für entsprechende Bildinformation
der Bildfelder des Referenzbildes, einen Vergleicher (32) zum Vergleichen der charakteristischen
Bildinformation mit der Referenz-Bildinformation
sowie eine Geometrieprüfvorrichtung (34) zum Prüfen
der gewonnenen Bildinformation anhand vorgegebener
geometrischer Kriterien aufweist.

12. Einrichtung nach Anspruch 11, dadurch g e k e n n -
z e i c h n e t, daß ein zusätzlicher Eingang
der Geometrieprüfvorrichtung von einem Ausgang
der Mikroprüfeinheit (22) gebildet ist, über welchen bei der Mikroprüfung nicht vollständig identifizierte Fehlersignale abgegeben werden.

13. Einrichtung nach einem der Ansprüche 7 bis 12,
dadurch g e k e n n z e i c h n e t, daß die Mikroprüfeinheit (22) und die Makroprüfeinheit (24)
mit einem Rechner (40) für die Gesamtfehlererfassung und -verwaltung zusammengeschaltet sind.

14. Einrichtung nach einem der Ansprüche 7 bis 13,
dadurch g e k e n n z e i c h n e t, daß die Aufnahmekamera eine CCD-Kamera (5) ist.

15.Einrichtung zum Durchführen des Verfahrens nach Anspruch 5, dadurch g e k e n n z e i c h n e t, daß eine Makroprüfeinheit folgende Bausteine umfaßt:

(a) einen Baustein (110) zum Komprimieren jeder Aufnahme (Zelle) um einen Faktor K;

(b) einen Baustein (111) zum Setzen der gemäß (a) gewonnenen Bildpunkte nach Mehrheitsentscheid auf einen der Werte "Hell" oder "Dunkel";

(c) einen Baustein (112) zum Zusammenfassen der gemäß (b) gewonnenen Aufnahmen zu einer einzigen Aufnahme durch Mehrheitsentscheid;

(d) einen Baustein (113) zum Ausblenden der Überlappungen zwischen den Aufnahmen;

(e) einen Scan-Speicher (114) zum Zusammenfassen der Aufnahmen gemäß (c) zu einem kompletten Scan;

(f) erste LUT-Operator-Bausteine (116,117);

(g) einen diesen nachgeschalteten Scroll-Speicher (118);

(h) einen Baustein (119) zum Verwalten und Zuordnen von Adressen;

(i) diesem nachgeschaltete zweite LUT-Operatoren (120,121);

(k) einen Baustein (122) zur Bildverfolgung und -auswertung;

(l) einen übergeordneten Rechner.

FIG. 1

**FIG. 2**

**FIG. 3**

FIG. 4

FIG. 5

FIG. 6

FIG. 7

| 0 | 1 | 2 | 3 | 4 | 5 | 6 | . . . . . . . . . . . . . . . | 1023 | |
|---|---|---|---|---|---|---|---|---|---|
| | | | 3c | 4c | 5c | 6c | | | c |
| | | | 3b | 4b | 5b | | | | b |
| | | | 3a | 4a | 5a | | | | a |

FIG. 8

FIG.9

```
                                                    0123443210
                                                    0123443210
                                                    0122343210
                        00                          0012343210
                      000000                         012343210
                    0000111100                       012343210
                  0001112222100                      012343210
                00001122223322100                    012343210
               00111222333443322100                 0123432100
              000122223344444432210                 0123432210
             0112233344455554432100                 0122343210
            000122344445566665432210               0012343210
           011223445556667765444 32100              012343210
          001223445666677876665432210               012343210
          012234456677777777765443210               012343210
         001234456777666666665432100                012343210
         012234566766655555555432210                0123432100
         012344567665554444444443210                0123432210
        001234566665444433333334432100              0122343210
        012234566654433322222223432210             0012343210.
        012344566544322221111122343210              012343210
       00123456654432211100000012233210             012343210
       0122345665432210000    001223210             012343210
       0123445654432100      001222100              012343210
       012345665432210        00122210              012343210
       012345654432100         0122210              012343210
       012345544322100         0012210             0123432100
       012345543221100          012210             0122332210
       0123454432100           001210             0012343210
       012345432210             00110              012343210
       012345432100              0010              012343210
       012345432100               010              012343210
       01234543210                000              012343210
       01234443210                 0               012343210
       01234432210                 0               012343210
       01234432100                 0               012343210
       0123443210                  0               012343210
       0123443210                  0               012343210
       0123443210                 00               0122332100
       0122343210                000               0012332210
       0012343210               0010               012343210
        012343210               0110               012343210
        0123432210             00110               012343210
        0123443210             01210               012343210
        0123443210            0012100              012343210
       0123443 2100           0122210              012343210
       01234432210            0122100              012233210
       012344432100           012210               001233221
       012345432 2100         0012210               01234321
       0123444432210          0122210               01234321
       01223454432100        00123210               01234321
       0012345543 22100      001223210              01234321
       012345544322100     0000012232210            01234322
       01234455443221000001111 22332100             01234432
       012234565443221111122222343210              01234432
       0012344565443222222223333432210             01223432
       0122345665443333333444443 2100              00123432
       0012344566544444444444432210               0123432
       0122345666555555554432221 00               0122332
       0012344566666666654432221 00               0012343
       0122344555555554432211 00                   012343
       00122344444444454322 1000                   012343
       00122333333344432100                        012343
       00122222222344 3210                          012343
       00111111122343210                           012234
       0000000001 2343210                          001234
             012343210                              01234
```

FIG.10

FIG.11

FIG.12

FIG.13

FIG.14